# EUROPEAN PATENT SPECIFICATION

(11) **EP 0 505 574 B1**
(45) Date of publication and mention of the grant of the patent: **02.01.1997**
(21) Application number: 91917696.6
(22) Date of filing: 15.10.1991
(51) Int. Cl.: B23C 5/22

(54) **THROWAWAY CUTTER AND THROWAWAY TIP**
WEGWERFWERKZEUG UND -EINSATZ
OUTIL DE COUPE ET TETE DE COUPE JETABLES

(30) Priority: 15.10.1990 JP 275903/90; 05.02.1991 JP 14523/91
(43) Date of publication of application: 30.09.1992
(73) Proprietor: MITSUBISHI MATERIALS CORPORATION, Chiyoda-ku, Tokyo 100 (JP)
(72) Inventor: ARAI, Tatsuo, Tokyo-Seisakusho Mitsubishi, Shinagawa-ku Tokyo 142 (JP); OKAWA, Masayuki, Tokyo-Seisakusho Mitsubishi, Shinagawa-ku Tokyo 142 (JP); SAITO, Takayoshi, Tokyo-Seisakusho Mitsubishi, Shinagawa-ku Tokyo 142 (JP)
(74) Representative: Füchsle, Klaus, Dipl.-Ing.
(86) International application number: JP9101400
(87) International publication number: WO9206811

(56) References cited:
- FR-U- 2 475 438
- JP-A-50 033 569
- JP-A-52 085 790
- JP-A-59 146 710
- JP-B-56 023 725
- JP-U-60 031 912

## Description

The present invention relates to indexable cutter inserts for a milling cutter (hereinafter referred to simply as "bit") which are arranged such that one of the opposite faces facing in the direction of the thickness of the bit is used as a flank face facing toward the radially outward direction of a cutter body, and another face is used for a mounting face to the cutter body.

An indexable cutter insert according to the preamble of claim 1 is known from FR-A-2 475 438.

Up to now, for machining which requires rigidity of a cutter body, such as machining of hard cutting materials, a so-called lengthwise bit milling cutter is used. Such a cutter has plate-like bits at a front and peripheral portion of a cutter body. The bits are arranged such that a front face or a rear face facing in the direction of the thickness of the bit is used for a mounting face adhering to a bit mounting seat of the cutter body. One of the side faces peripherally lying between the front and rear face is directed toward the cutting (rotational) direction to be used for a cutting face. Cutting edges are formed at the intersections between the cutting faces and a flank face for machining a workpiece as the cutter body rotates.

The bit used for such a milling cutter has a generally square shape in plane view. The side faces used for a cutting face are usually formed in a uniform plane in order to increase adhesion between the side face and a side wall of the bit mounting seats.

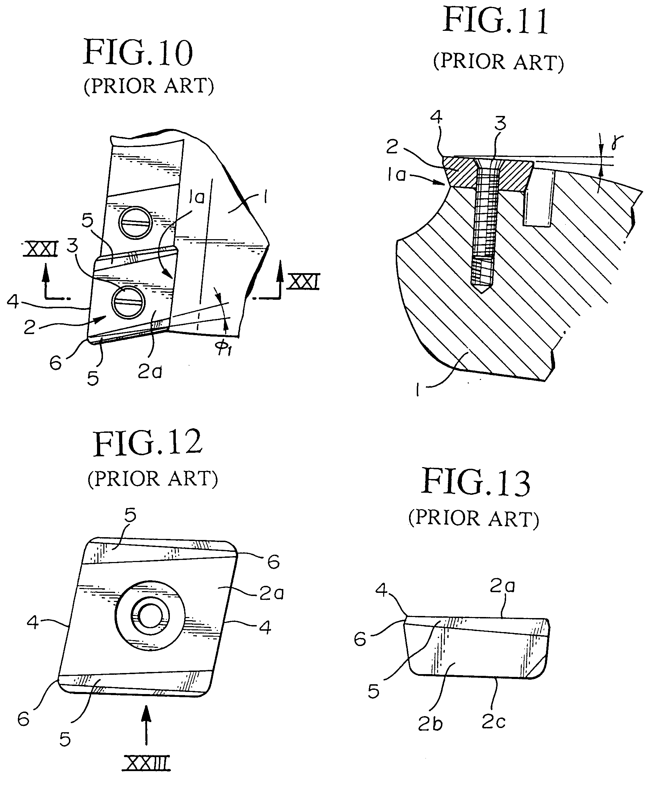

Figs. 10 and 11 illustrate an example of such a type of lengthwise bit milling cutter. The milling cutter comprises a disk-like cutter body 1 having a plurality of bit mounting seat 1a circumferentially arranged at a periphery of the cutter body 1. A plate-like bit 2 (Fig. 12 and 13) having a diamond shape is removably mounted by a clamp bolt 3 to each bit mounting seat such that the direction of the thickness of the bit is directed substantially toward the direction of the radius of the cutter body 1. In such a milling cutter, a main cutting edge 4 of the bit 2, directed toward the cutting direction, engages a workpiece to carry out desired cutting operations as the cutter body 1 rotates.

The bit 2 is made from a cemented carbide and formed into a diamond shape of a plate-like body. Main cutting edges 4 are formed at intersections of side faces 2b and a upper face 2a directed toward the radially outward direction of the milling cutter. Second flank faces 5 are formed at intersections of the upper face 2a and the other side faces 2b. A second cutting edge 6 is formed at a lengthwise end of the second flank face 5. The bit 2 constructed such as above is mounted to the cutter body 1 such that one main cutting edge 4 is directed toward the cutting (rotational) direction, the second cutting edge 6 is projected toward the front end of the cutter body 1, and the second cutting edge has a desired front clearance angle.

In the lengthwise bit milling cutter as above, the strength of the bit 2 is increased since the cutting force is exerted to the bit 2 along the lengthwise direction thereof. Furthermore, the depth of the bit mounting seat 1a can be as shallow as the thickness of the bit 2. Therefore, in the above milling cutter, the rigidity of the cutter body 1 can be increased, so that a cutting operation of a hard cutting material at a higher cutting feed rate and a higher cutting speed can be carried out in comparison with ordinary milling cutters in which one of the front face and the rear face of a bit is used as a cutting face.

However, in the cutting operation in a high cutting feed rate and a high cutting speed, the quantity of cuttings produced at the main cutting edge increases, so that a smooth discharge of the cuttings is required. In the prior milling cutter such as above, the side face of the bit is formed into a uniform plane, the cuttings having a large width and plate-like shape elongated without breaking into chips, so that the discharge of cuttings is not sufficiently smooth.

Moreover, in a cutting operation of a workpiece, such one made of a cast iron, having a hard surface layer, the rear end of a main cutting edge should have sufficient strength so as to ensure the service life of the bit. In order to have sufficient strength at the main cutting edge, the axial rake angle of the main cutting edge may be set negative, which results in an increase in cutting resistance. However, in the prior milling cutter having uniform plane side faces, as the axial rake angle is fixed in a whole length of the main cutting edge, both requirements, increasing the strength of the main cutting edge and decreasing the cutting resistance, cannot be satisfied.

In addition, in the prior art milling cutter such as above, in order to have a front clearance angle at the second cutting edge 6, the second flank faces 5 are formed at the opposite sides of four ridge portions of the upper face 2a by removing the intersections between the upper face 2a and the side faces 2b. Therefore, only two corners of the upper face 2a can be used for cutting operations, so that the bit 2 cannot be used economically.

Of course, when the above type of bit 2 is formed as a negative type bit, in which the side faces 2b are perpendicular to the upper face 2a, as well, two of four intersections between the side faces 2b and the lower face 2c of the bit 2 can be formed with main cutting edges 4 respectively, so that all four corners can be used.

However, in an ordinary throw-away type milling cutter, in which the upper face or the lower face of a square-shaped bit is directed toward the cutting direction, eight corners can be used. In comparison with such a milling cutter, the above prior milling cutter is not economical, although four corners of the bit can be used, and therefore, there is desired a milling cutter which can use all eight corners of a bit.

It is therefore an object of the present invention to provide a bit which can solve the above problems of the prior art bit for a lengthwise bit type milling cutter, so that a smooth discharge of the cuttings is ensured, the strength of the rear end of a cutting edge is increased, and the cutting resistance can be reduced, all eight corners of the bit can be used, and the bit may be used economically.

### Disclosure of the Invention

The above problems are solved according to present invention by an indexable cutter insert (bit) having a polygonal plate-like shape comprising:
an upper face and a lower face arranged at opposite sides in the direction of the thickness of the cutter insert, one of the upper and lower faces being employed as a flank face and another face being employed as a mounting face adhered to a bit mounting seat of a cutter body,
side faces peripherally lying between the upper face and the lower face and being employed as cutting faces,
wherein plane faces are formed at lengthwise opposite ends of the side faces, a concave face is formed between the plane faces, being gradually deepened from the intersections between the plane faces and the concave face toward the center of the concave face, and main cutting edges are formed at the intersections between the concave face and the upper and lower faces,
**characterized in that**
the plane faces are perpendicular to the upper and lower faces.

In the bit constructed as above, the cuttings produced by the main cutting edge flow along the concave face, and are curled due to contact with the concave face. As a result, the degree of the deformation of the cuttings is large, so that the cuttings can be easily broken into chips, and smooth discharge of the cuttings can be ensured. Moreover, the main cutting edge is in the form of an arc, so that the axial rake angle of the front portion of the main cutting edge is large, and the cutting performance is improved. In addition, the axial rake angle of the rear portion of the main cutting edge is decreased and the strength of the main cutting edge is increased. Therefore, in machining a workpiece, such as cast iron having a hard surface layer, the inner soft layer of the workpiece can be machined by the front portion of the main cutting edge, so that cutting efficiency can be improved. Moreover, the hard surface layer of the workpiece can be machined by the rear portion of the main cutting edge, so that the durability of the bit can be increased.

In the accompanying drawings:

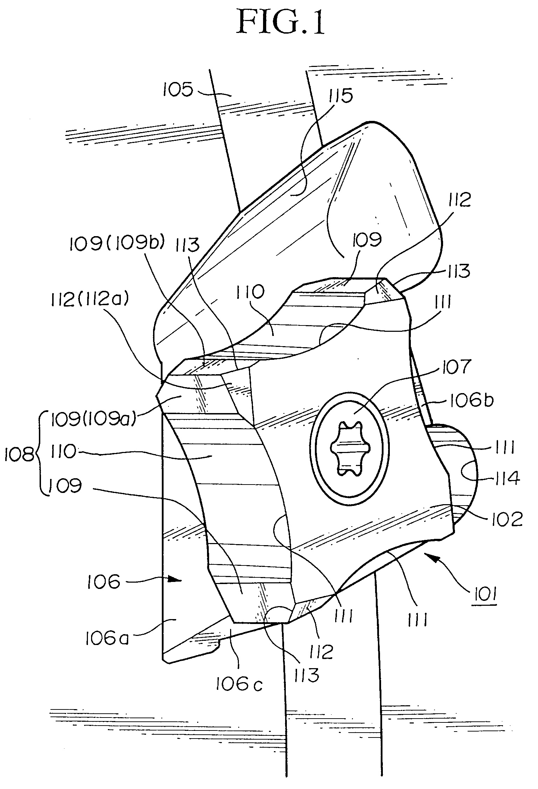

Figures 1 through 9 illustrate an embodiment of a bit of the present invention;

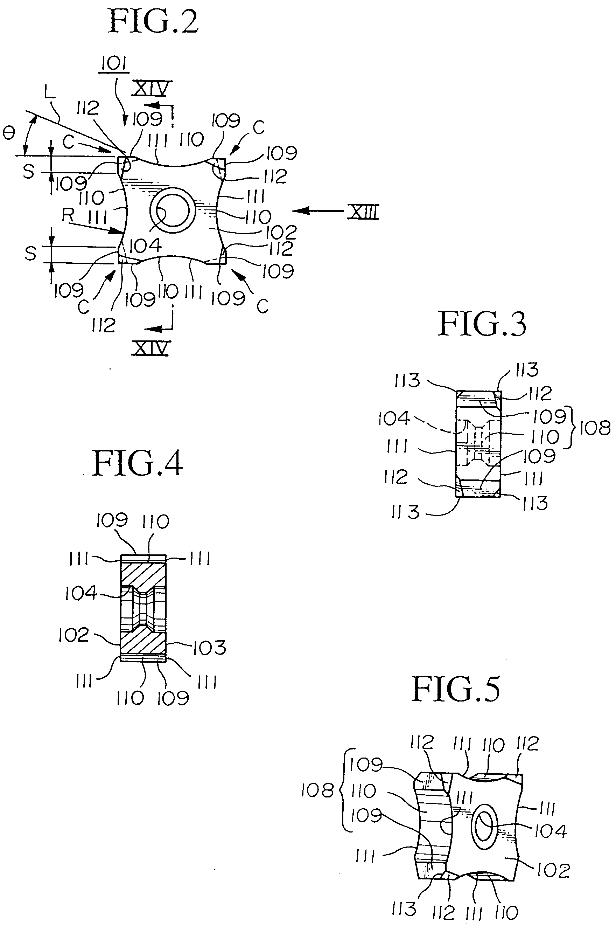

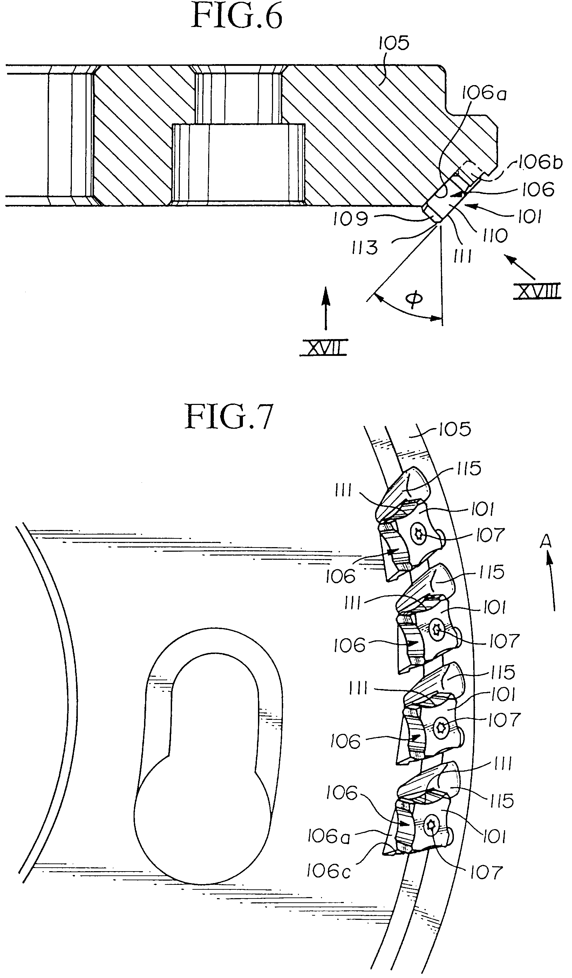

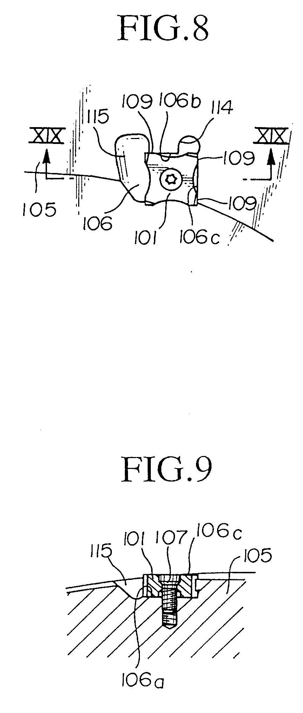

Figure 1 is an enlarged view of a bit mounted to a cutter body viewed from the front end of the milling cutter; Figure 2 is a plan view of the bit; Figure 3 is a view as viewed from the arrow XIII in Figure 2; Figure 4 is a cross-sectional view taken along the line XIX-XIX in Figure 2; Figure 5 is a perspective view of the bit shown in Figure 2; Figure 6 is a cross-sectional view taken along an axis of the cutter body; Figure 7 is a view as viewed from the arrow XVII in Figure 6; Figure 8 is a view as viewed from the arrow XVIII in Figure 6; Figure 9 is a cross-sectional view taken along the line XIX-XIX in Figure 8;
Figures 10 through 13 illustrate an example of the conventional milling cutter;
Figure 10 is a cross-sectional view taken along an axis of the cutter body; Figure 11 is a cross-sectional view taken along the line XXI-XXI in Figure 10; Figure 12 is a plan view of conventional bit; Figure 13 is a view as viewed from the arrow XXIII in Figure 12.

Figures 1 through 9 illustrate an embodiment of the present invention.

In the figures, numeral 101 indicates a bit of this embodiment. As illustrated in Figures 1 through 5, the bit 101 is made from a cemented carbide and formed into a plate-like body. The bit 101 has an upper face 102 and a lower face 103 having four corners C respectively. The upper face 102 and a lower face 103 are in the same shape and are parallel to each other. As illustrated in Figure 2 through 5 in more detail, the bit 101 is formed with an aperture 104 extending in the direction of thickness of the bit 101 and opening at the center of the upper and lower faces 102 and 103. The aperture 104 can be penetrated by a clamp bolt 107 which secures the bit 101 to a bit mounting seat 106 of a cutter body 105 (this will be explained later).

The bit 101 is formed with four side faces 108 peripherally lying between the upper and the lower faces 102 and 103. Each side face 108 consists of two plane faces 109 arranged at opposite ends of the side face 108. The plane faces 109 are perpendicular to the upper and lower faces 102 and 103. A concave face 110 is formed between the plane faces 109. The concave face is gradually deepened from the intersections between the plane faces 109 and the concave face 110 toward the center of the concave face 110 (see Figures 1, 3, and 5). The plane face 109 is arranged on a plane including another plane face 109, and is perpendicular to adjacent plane face 109 of adjacent side face 108, so that all the corner angles are set at 90° in plan view of the bit 101. The length S along the lengthwise direction of the side face 108 (see Figure 2) is appropriately chosen in accordance with the cutting conditions and the length of the side of the upper and lower faces 102 and 103, preferably set all equal to 1.85 mm in this embodiment. However, one length S of the plane face 109 can be different from another length S of the plane face 109 on the same side face 108, and the length S of the plane face 109 can be different from each other in every side faces 108.

On the other hand, the concave face 110 is formed into an arcuate face curved toward the inner portion of the bit 101 at a prescribed diameter R of curvature (see Figure 2), and the center portion of the concave face 110 in the lengthwise direction of the side face 108 is most deeply concave. The concave faces 110 are perpendicular to the upper and lower faces 102 and 103 so that the diameter of the curvature of the concave face 110 is fixed toward the direction of the thickness of the bit 101. Moreover, main cutting edges 111 are formed at the intersections between the concave face 110 and the upper and lower faces 102 and 103.

The diameter R of curvature of the concave face 110 is chosen in accordance with the length of a side of the upper and lower faces 102 and 103 and the cutting condition as well as the length S of the plane face 109, preferably set at 10 mm in this embodiment. As shown in Figure 2, the angle θ of the tangential line L of the concave face 110 at the intersection between the concave face 110 and the plane face 109 with respect to the plane face 109 is preferably set at 26°45' in this embodiment. The diameters R of curvatures of the concave faces can be different from one another in every side face 108.

Moreover, as shown in Figure 1 in greater detail, a second flank face 112 is formed at the intersections between the plane face 109 and the upper and lower faces 102, 103. The second flank face 112 adjoins the upper face 102 or the lower face 103 at an obtuse angle. The second flank face 112 is formed by chamfering the intersection portion between the plane face 109 and the upper and lower faces 102 and 103 toward a downslope direction by means of a machining means such as a grinder.

As shown in Figure 2, the second flank faces 112 of the upper face 102 are arranged in the same circumferential direction, and the second flank faces 112 of the lower face 103 are arranged in the opposite circumferential direction. The second flank face 112 intersects to the adjoined two plane faces 109. That is, along the clockwise direction in plan view of the upper face 102, the front end of the second flank face 112a reaches the adjacent plane face 109b of the adjacent side face 108. Similarly, other front ends of the second flank faces 112 reach the adjacent plane faces 109 of the adjacent side faces 108. On the other hand, the rear end of the second flank faces 112 reaches the concave faces 110. A second cutting edge 113 is formed at the intersection of the front end of the second flank face 112 and the adjacent plane face 109.

Before the description of the nature and the effect of the bit 101, the structure of a cutter body 105 of a milling cutter employing a plurality of the bit 101 will be explained briefly; the nature and the effect employed to the milling cutter will follow.

As shown in Figures 6 through 9, the cutter body 105 is in the shape of a ring. The cutter body 105 is formed with a plurality of bit mounting seats 106 circumferentially arranged at even intervals at a peripheral front portion of the cutter body 105. The bit mounting seat 106 is defined by a bottom wall 106a facing radially outwardly, and a first side wall 106b and a second side wall 106c perpendicular to the bottom wall 106a. The bottom wall 106a is formed into an inclined face which is upslope toward the center of the cutter body 105. On the other hand, as shown in Figures 7 and 8, the second side wall 106c is formed into an inclined face inclined toward the counterclockwise direction (shown by arrow A in Figure 7). The first side wall 106b is perpendicular to the second side wall 106c. Chip pocket 115 concaved inwardly is formed at the adjacent leading portion of the bit mounting seat 106.

As shown in Figure 1, the bit 101 located on the bit mounting seat 106 such that one of the upper and lower faces 102 and 103 (the upper face 102 is chosen in Figure 1) is employed as a clearance face directed radially outwardly, another face (102 or 103) is employed as a mounting face adhering to the bottom wall 106a of the bit mounting seat 106. The bit 101 is fastened to the cutter body 105 by a clamp bolt 107. The upper face 102 is inclined so as to have a prescribed corner angle φ (see Figure 6) in accordance with the inclination of the bottom wall 106a, so that the second cutting edge 113 is perpendicular to the axis of the cutter body 105. Furthermore, as shown in Figure 7, the bit 101 is inclined toward the counterclockwise in accordance with the inclination of the first and second side walls 106b and 106c. That is, the radially outward portion of the bit 101 projects toward the cutting direction from the radially inward portion of the bit 101.

In the bit 101 arranged as above, one of the four side faces 108 is chosen for a cutting face, and the main cutting edge 111 adjacent the chosen side face 108 is employed for machining a workpiece (not shown) as the cutter body 105 rotates.

In the cutting operation, since the cutting face is the concave face 110, the cuttings produced by the main cutting edge 111 flows crossing the main cutting edge 111, and at the time, the cuttings are curled due to contact with the concave face 110. As a result, the degree of the deformation of the cuttings is large in comparison with the case in which prior art bits are used, so that cuttings can be easily broken into chips, and smooth discharge of the cuttings can be ensured.

Furthermore, since the main cutting edge 111 is in the form of an arc, the axial rake angle of the main cutting edge 111 gradually change toward the direction of the axis of the cutter body 105. That is, in a range from the front end of the main cutting edge 111 to the center of the main cutting edge, the axial rake angle of the main cutting edge 111 gradually increases toward the center of the main cutting edge 111. However, in a range from the center of the main cutting edge 111 to the rear end of the main cutting edge 111, the axial rake angle gradually decreases toward the rear end of the main cutting edge 111. For this structure, in the front portion of the main cutting edge 111, the cutting performance can be improved and the cutting resistance can be reduced. On the other hand, in the rear portion of the main cutting edge 111, the strength of the main cutting edge is increased. Due to such a change of the axial rake angle, in machining a workpiece such as a cast iron having a hard surface layer, the inner soft layer of the workpiece can be machined by the front portion of the main cutting edge 111, so that cutting efficiency can be improved; the hard surface layer of the workpiece can be machined by the rear portion of the main cutting edge 111 having high strength, so that the durability of the bit 101 can be increased.

Moreover, since the plane faces 109 are formed on the opposite ends of the side face 108, the bit 101 can be rigidly secured to the bit mounting seat 106 by adhering the plane faces 109 to the first and second side walls 106b and 106c of the bit mounting face 106. In this connection, when the whole side face 108 is formed into a concave face, the bit cannot be rigidly secured to the first and second side walls 106b and 106c, so that many type of problem such as chatter will result.

The above constructed bit 101 is one embodiment of the present invention, so that the shape of the bit 101 can be of other polygonal shapes such as a triangle. In addition, the side face 108 of the bit 101 can be formed with inclined downslope faces toward the center of the side face from opposite ends of the side face 108 instead of the concave face 110.

As mentioned above, in the bit according to the present invention, since the cuttings produced by the main cutting edge flow along the concave face and are curled due to contact with the concave face, the degree of the deformation of the cuttings is large, so that the cuttings can be easily broken into chips, and smooth discharge of the cuttings can be ensured. Moreover, since the main cutting edge is in the form of an arc, the axial rake angle of the front portion of the main cutting edge is large, so that the cutting performance improves; and since the axial rake angle of the rear portion of the main cutting edge is decreased and the strength of the main cutting edge is increased. Therefore, in machining a workpiece such as cast iron having a hard surface layer, the inner soft layer of the workpiece can be machined by the front portion of the main cutting edge, so that cutting efficiency can be improved; and the hard surface layer of the workpiece can be machined by the rear portion of the main cutting edge, so that the chipping or breakage of the main cutting edge can be prevented.

In addition, since the plane faces are formed on the side faces of the bit, the plane faces can be adhered to the walls of the bit mounting seat, so that the bit can be rigidly secured to the bit mounting seat.

### Capacity for Utilizing the Invention

In the present invention, since all corners of a bit can be used for machining, the bit can be used economically and cost for machining can be reduced; the durability of the bit can be improved; and the bit can be secured rigidly to a bit mounting seat of a cutter body.

## Claims

1. An indexable cutter insert having a polygonal plate-like shape comprising:
- an upper face (102) and a lower face (103) arranged at opposite sides in the direction of the thickness of the cutter insert (101), one of the upper and lower faces being employed as a flank face and another face being employed as a mounting face adhered to a bit mounting seat (106) of a cutter body,
- side faces (108) peripherally lying between the upper face (102) and the lower face (103) and being employed as cutting faces,
wherein plane faces (109) are formed at lengthwise opposite ends of the side faces (108), a concave face (110) is formed between the plane faces (109), being gradually deepened from the intersections between the plane faces (109) and the concave face (110) toward the center of the concave face (110), and main cutting edges (111) are formed at the intersections between the concave face (110) and the upper (102) and lower faces (103),
**characterized in that**
the plane faces (109) are perpendicular to the upper (102) and lower faces (103).

2. An indexable cutter insert in accordance with claim 1, wherein second flank faces (112) are formed at the intersections between a plane face (109) and the upper (102) and lower faces (103), each second flank face (112) adjoins the plane face (109) and the upper (102) and lower faces (103) in an obtuse angle, and an end of each second flank face (112) intersects adjacent plane face (109) adjoined said one plane face (109), and a second cutting edge (113) is formed at the intersection between the second flank face and said adjacent plane face (109).

## Patentansprüche

1. Umschaltbarer Schneideinsatz mit einer polygonalen scheibenartigen Form, der folgendes aufweist:
- eine obere Seite (102) und eine untere Seite (103), die an gegenüberliegenden Seiten in der Dickenrichtung des Schneideinsatzes (101) angeordnet sind, wobei eine der oberen und unteren Seiten als eine Flankenseite eingesetzt ist und eine andere Seite als eine Montageseite eingesetzt ist, die an einem Schneidenmontagesitz (106) eines Schneidkörpers anhaftet,
- seitliche Seiten (108), die peripher zwischen der oberen Seite (102) und der unteren Seite (103) liegen und als Schneidseiten eingesetzt sind,
wobei ebene Seiten (109) an längs gegenüberliegenden Enden der seitlichen Seiten (108) gebildet sind, eine konkave Seite (110) zwischen den ebenen Seiten (109) gebildet ist, die allmählich von den Überschneidungen zwischen den ebenen Seiten (109) und der konkaven Seite (110) in Richtung des Zentrums der konkaven Seite (110) vertieft ist, und wobei Hauptschneidkanten (111) an den Überschneidungen zwischen der konkaven Seite (110) und den oberen (102) und unteren Seiten(103) gebildet sind,
**dadurch gekennzeichnet, daß**
die ebenen Seiten (109) rechtwinklig zu den oberen (102) und unteren Seiten (103) sind.

2. Umschaltbarer Schneideinsatz nach Anspruch 1, wobei zweite Flankenseiten (112) an den Überschneidungen zwischen einer ebenen Seite (109) und den oberen (102) und unteren Seiten (103) gebildet sind, wobei jede zweite Flankenseite (112) an die ebene Seite (109) und die oberen (102) und unteren Seiten (103) in einem stumpfen Winkel anstößt, und ein Ende jeder zweiten Flankenseite (112) die angrenzende ebene Seite (109) schneidet, die an die eine ebene Seite (109) angrenzt, und eine zweite Schneidkante (113) ist an der Überschneidung zwischen der zweiten Flankenseite und der angrenzenden ebenen Seite (109) gebildet.

## Revendications

1. Elément rapporté d'outil de coupe indexable ayant une forme analogue à une plaque polygonale, comprenant :
une face supérieure (lO2) et une face inférieure (lO3) disposées aux côtés opposés dans le sens de l'épaisseur de l'élément rapporté (lOl) de l'outil de coupe, l'une des faces supérieure et inférieure étant employée comme face de flanc et l'autre face étant utilisée comme face de montage adhérant à un siège (lO6) de montage de lame du corps de l'outil de coupe,
des faces latérales (lO8) situées périphériquement entre la face supérieure (lO2) et la face inférieure (lO3) et employées comme faces de coupe,
où des faces planes (lO9) sont formées aux extrémités longitudinalement opposées des faces latérales (lO8), une face concave (llO) est formée entre les faces planes (lO9), approfondie progressivement à partir des intersections entre les faces planes (109) et la face concave (llO) dans la direction du centre de la face concave (llO), et des arêtes coupantes principales (lll) sont formées aux intersections entre la face concave (llO) et les faces supérieure (lO2) et inférieure (lO3),
caractérisé en ce que :
les faces planes (lO9) sont perpendiculaires aux faces supérieure (lO2) et inférieure (lO3).

2. Elément rapporté d'outil de coupe indexable selon la revendication l, où des secondes faces de flanc (ll2) sont formées aux intersections entre une face plane (lO9) et les faces supérieure (lO2) et inférieure (lO3), chaque seconde face de flanc (ll2) est contiguë à la face plane (lO3) et aux faces supérieure (lO2) et inférieure (lO3) suivant un angle obtus, et une extrémité de chaque seconde face de flanc (ll2) coupe une face plane adjacente (lO9) contiguë à ladite face plane (lO9), et une seconde arête coupante (ll3) est formée à l'intersection entre la seconde face de flanc et ladite face plane adjacente (lO9).
